# EUROPÄISCHE PATENTANMELDUNG

(11) **EP 4 610 024 A1**
(43) Veröffentlichungstag der Anmeldung: **03.09.2025**
(21) Anmeldenummer: 24160483.4
(22) Anmeldetag: 29.02.2024
(51) Int. Cl.: B29C 53/36, B32B 7/022, B29C 63/04

(54) **VERFAHREN ZUR BEREITSTELLUNG EINES BEZUGSSTOFFES ZUM BEZIEHEN EINES OBJEKTES SOWIE DER BEZUGSSTOFF**

(71) Anmelder: Henkel AG & Co. KGaA, 40589 Düsseldorf (DE)
(72) Erfinder: Schriefers, Mathias, 41199 Möchengladbach (DE); Thelen, Natalie, 45359 Essen (DE); Kluckow, Anna-Carina, 42349 Wuppertal (DE); Friedrich, Norman, 40225 Düsseldorf (DE); Prell, Jonathan, 40223 Düsseldorf (DE); Kleiner, Felix, 01689 Weinböhla (DE); Groenke, Sandra, 51381 Leverkusen (DE)
(74) Vertreter: Patentanwälte Bauer Vorberg Kayser

(57) **Zusammenfassung**

Die Erfindung betrifft ein Verfahren zur Bereitstellung eines Bezugsstoffes (1), welcher zum Beziehen eines Objekts dient und beim Beziehen des Objekts derart verformt wird, dass eine Oberseite (13) eines Oberflächenmaterials (10) des Bezugsstoffes (1) in einem Knickgefährdungsbereich (2) einer Druckspannung ausgesetzt ist, wobei das Verfahren umfasst: a) Herstellen des Oberflächenmaterials (10); b) Überführen des Oberflächenmaterials (10) in einen verformten Zustand, bei dem die Oberseite (13) des Oberflächenmaterials (10) in dem Knickgefährdungsbereich (10) auf Druck beansprucht wird, c) Auftragen eines aushärtbaren Kunststoffes in fließfähiger Form auf eine Rückseite (14) des Oberflächenmaterials zur Bildung einer rückseitigen Fixierungsschicht (30); d) Aushärten des Kunststoffes; und e) Auflösen des verformten Zustands des Oberflächenmaterials (10) nach erfolgter Aushärtung des Kunststoffes. Des Weiteren betrifft die Erfindung den Bezugsstoff (1) als solchen.

## Beschreibung

Die Erfindung betrifft ein Verfahren zur Bereitstellung eines Bezugsstoffes, welcher zum Beziehen eines Objekts dient. Des Weiteren betrifft die Erfindung einen Bezugsstoff als solchen.

Nach dem Beziehen des Objektes beispielsweise in Form eines Autositzes unterliegt der Bezugsstoff oft gewissen Spannungen. Erstreckt sich der Bezugsstoff über eine konvexe Teilkontur des Autositzes, so sorgt eine Zugspannung in dem Bereich des Bezugsstoffes über der konvexen Teilkontur in einem Oberflächenmaterial des Bezugsstoffes dafür, dass ein Oberflächenmaterial des Bezugsstoffes eng an der Teilkontur anliegt. In einem konkaven Bereich beispielsweise zwischen einer Sitzfläche und einer Umrandung der Sitzfläche ist es üblich, an der Übergangskante zwischen Umrandung und Sitzfläche eine Naht vorzusehen, sodass dort der Bezugsstoff fest mit dem Autositz verbunden ist und sowohl an der Sitzfläche als auch an der Umrandung eng anliegt.

Darüber hinaus kann es konkave oder nach innen gewölbte Bereiche beim Autositz geben, in denen eine Naht oder eine ähnliche Fixierung des Bezugsstoffes am Autositz aus ästhetischen oder anderen Gründen nachteilhaft ist. Wenn der Bezugsstoff dem konkaven Bereich des Autositzes folgen soll, muss der Bezugsstoff entsprechend verformt werden, wobei eine Oberseite des Oberflächenmaterials dabei zusammengedrückt wird und einer Druckspannung ausgesetzt ist. Ist die Druckspannung zu groß bzw. der Radius des konkaven Bereichs zu klein, kann das Oberflächenmaterial an dieser Stelle einknicken. Es entstehen dabei Knickfalten, die neben der ästhetischen Beeinträchtigung das Oberflächenmaterial beschädigen können. Ein solcher Bereich, in dem das Oberflächenmaterial bei zu kleinem Krümmungsradius einzuknicken droht, wird hier auch als Knickgefährdungsbereich bezeichnet.

Durch eine geeignete Auswahl des Oberflächenmaterials lässt sich die Gefahr eines Einknickens reduzieren. Jedoch reduziert sich dadurch die Anzahl der zur Verfügung stehenden Oberflächenmaterialen/Bezugsstoffe für ein zu beziehendes Objekt. Auch kann durch die Gestaltung oder Formgebung des Objektes versucht werden, die Gefahr eines Einknickens des Bezugsstoffes zu reduzieren, indem kleine Krümmungsradien vermieden werden oder eben doch auf die oben beschriebene Naht zurückgegriffen wird. Dies jedoch schränkt die Gestaltung und/oder die Ästhetik des zu beziehenden Objekts ein.

Der Erfindung liegt daher die Aufgabe zu Grunde, ein einfaches Verfahren zur Bereitstellung eines Bezugsstoffes zum Beziehen eines Objekts anzugeben, wobei der Bezugsstoff beim Beziehen des Objektes auch bei komplexen Konturen nicht einknickt.

Die der Erfindung zu Grunde liegende Aufgabe wird mit dem Gegenstand gemäß Anspruch 1 gelöst. Ausführungsbeispiele können den Unteransprüchen zu Anspruch 1 entnommen werden.

Erfindungsgemäß ist vorgesehen, dass nach dessen Herstellung das Oberflächenmaterial von einem unbelasteten und spannungsfreien Urzustand in einen verformten Zustand überführt wird, bei dem die Oberseite des Oberflächenmaterials in dem Knickgefährdungsbereich auf Druck beansprucht wird. Im verformten Zustand entstehen somit Spannungen im Oberflächematerial. Die dabei auftretende Druckspannungen sind jedoch nicht so groß, dass sie zu dem unerwünschten Einknicken des Oberflächenmaterials führen.

Auf eine Rückseite des Oberflächenmaterials wird in dem verformten Zustand des Oberflächenmaterials ein aushärtbarer Kunststoff in fließfähiger Form aufgetragen. Durch das Auftragen bildet sich auf der Rückseite des Oberflächenmaterials eine Fixierungsschicht. Der Kunststoff bzw. die Fixierungsschicht härtet nun aus, wobei während der Aushärtung das Oberflächenmaterial weiter in dem verformten Zustand fixiert bleibt. Nachdem der Kunststoff ausgehärtet ist, wird dann der verformte Zustand des Oberflächenmaterials aufgelöst, wobei bedingt durch die elastischen Rückstellkräfte das Oberflächenmaterial in Richtung des zuvor unbelasteten Urzustands zurückfedert. Jedoch erreicht das Oberflächenmaterial beim Zurückfedern nicht mehr den unbelasteten Urzustand, da beim Zurückfedern im Oberflächenmaterial zwar die Spannung nachlässt, in der Fixierungsschicht aber gleichzeitig eine gewisse Spannung aufgebaut wird. Letztlich nimmt der Bezugsstoff, also der Verbund aus dem Oberflächenmaterial und der aufgetragenen Fixierungsschicht aus Kunststoff, eine gegenüber dem Urzustand verformte Gestalt an, bei der die Spannung in dem Oberflächenmaterial und die Spannung in der Fixierungsschicht im Gleichgewicht stehen.

Es hat sich herausgestellt, dass der so bereitgestellte Bezugsstoff weit über den verformten Zustand hinaus, den er beim Auftragen der Fixierungsschicht eingenommen hatte, verformt werden kann, ohne dass es zu einer oder mehreren unerwünschten Knickfalten im Knickgefährdungsbereich kommt. Der nach dem erfindungsgemäßen Verfahren bereitgestellte Bezugsstoff lässt sich dabei deutlich weiter verformen als ein vergleichbares Oberflächenmaterial, das nicht mit der Fixierungsschicht beschichtet wurde. Dies erhöht die Anzahl der in Frage kommenden Oberflächenmaterialen zum Beziehen des Objekts und/oder die Freiheiten bei der Gestaltung des Objekts.

In einem Vergleichstest wird ein Oberflächenmaterial ohne rückseitig aufgebrachte Fixierungsschicht sukzessive bis zu einem Grad verformt, bei dem sich an der Oberseite des Oberflächenmaterials, welche radial nach innen zeigt, Knickfalten bilden. Bis zu einem Krümmungsradius von 5,8 cm bilden sich hier keine Knickfalten. Bei weiterer Verformung, also bei weiterer Verkleinerung des Krümmungsradius, knickt das Oberflächenmaterial ein. Bei gleichem Oberflächenmaterial, nun jedoch an der Rückseite beschichtet mit dem Kunststoff nach dem erfindungsgemäßen Verfahren, kann der Bezugsstoff weit über den Krümmungsradius von 5,8 cm hinaus verformt werden. Erst bei einem Krümmungsradius von 2,3 cm entstehen an der nach innen gerichteten Oberseite des Oberflächenmaterials Knickfalten. Dieser Zustand, bei dem bei der sukzessiven Verformung das erste Mal Knickfalten auftreten, wird im Folgenden kurz mit "Knickverformung" umschrieben. Dieser Vergleich zeigt, dass durch die rückseitige Beschichtung des Oberflächenmaterials mit dem erfindungsgemäßen Verfahren die Knickneigung des Oberflächenmaterials signifikant reduziert werden kann.

Ohne an diese Theorie gebunden zu sein, wird vermutet, dass die Fixierungsschicht eine stützende Funktion für das Oberflächenmaterial darstellt. Diese Abstützung wirkt der Knickgefährdung entgegen. Da beim Auftragen der Fixierungsschicht gemäß dem erfindungsgemäßen Verfahren das Oberflächenmaterial schon bereits in Richtung Knickverformung vorgespannt ist, während die Fixierungsschicht spannungsfrei aufgetragen wird, ist die Fixierungsschicht im Punkt der Knickverformung grundsätzlich weniger stark verformt wie das Oberflächenmaterial und kann daher als Widerstand gegen das Einknicken des Oberflächenmaterials wirken.

Der Kunststoff kann auf die Rückseite des Oberflächenmaterials aufgesprüht oder aufgegossen werden. Ein Flächengewicht der Fixierungsschicht kann in einem Bereich von 20 bis 700 g/m² liegen. In einem Ausführungsbeispiel beträgt das Flächengewicht 45 bis 250 g/m², vorzugsweise 70 bis 150 g/m².

Der Kunststoff kann ganzflächig auf die Rückseite des Oberflächenmaterials aufgetragen werden. In einem Ausführungsbeispiel wird der Kunststoff nur in dem Knickgefährdungsbereich vollflächig auf die Rückseite des Oberflächenmaterials aufgetragen, also dort, wo der Bezugsstoff am stärksten verformt wird und am ehesten mit einer Knickbildung zu rechnen ist.

Der Kunststoff der rückseitigen Fixierungsschicht kann physikalisch aushärten. Die physikalische Aushärtung basiert dabei auf der Verdunstung eines Lösemittels, das ein organisches Lösemittel, ein anorganisches Lösemittel oder auch Wasser sein kann. Alternativ oder zusätzlich kann der Kunststoff auch chemisch aushärten. Ein Beispiel für die chemische Aushärtung ist die Reaktion von zwei oder mehreren Komponenten des Kunststoffes, die kurz vor dem Auftragen auf die Rückseite des Oberflächenmaterials zusammengemischt werden können.

Die Wahl eines geeigneten Kunststoffes für die Fixierungsschicht hängt von vielen Faktoren ab, beispielsweise von der geforderten Temperaturstabilität des Bezugsstoffes, Wasch- und Wasserresistenz, Transparenz etc.). In einem Ausführungsbeispiel umfasst der Kunststoff der rückseitigen Fixierungsschicht Polyurethan. Der Kunststoff kann dabei eine Mischung aus Polyurethan und einer weiteren Kunststoffkomponente sein. Zur Bereitstellung des Polyurethans kann eine Polyol-Komponente und eine Isocyanat-Komponente in einer Auftragsdüse unmittelbar vor dem Sprühen auf die Rückseite des Oberflächenmaterials zusammengeführt und in der Auftragsdüse erst vermischt werden.

Das Oberflächenmaterial kann eine erste Schicht aufweisen, die ein textiles Flächengebilde sein kann und/oder aus Leder, Kunststoff bzw. Kunstleder ist. Das Oberflächenmaterial kann eine zweite Schicht aufweisen, die bevorzugt aus einem (Kunststoff-)Schaum ist.

An der Rückseite des Oberflächenmaterials kann eine Verstärkungsschicht angebracht sein. Die Verstärkungsschicht kann eine Vielzahl von Fasern oder Fäden umfassen, die ein Geflecht, Gestrick, Vlies, Gewirke oder ein Gelege bilden. Die Verstärkungsschicht kann nur innerhalb des Knickgefährdungsbereichs vorgesehen sein. In einem Ausführungsbeispiel wird zunächst die Verstärkungsschicht an der Rückseite des Oberflächenmaterials angeordnet und danach der Kunststoff auf die Rückseite aufgetragen.

Für das Überführen des Oberflächenmaterials in den verformten Zustand kann ein Formkörper verwendet wird, an dem das Oberflächenmaterial anliegt, sodass das Oberflächenmaterial einer Kontur des Formkörpers folgt. Beispielsweise kann es sich bei den Formkörper um einen Halbzylinder handeln, auf dessen Mantelfläche das Oberflächenmaterial gelegt wird. Die Oberseite des Oberflächenmaterials ist dabei zur Mantelfläche gerichtet, während die Unterseite des Oberflächenmaterials radial nach außen zeigt. Es können Befestigungsmittel vorgesehen sein, die das Oberflächenmaterial an dem Formkörper befestigen bzw. fixieren. Die Befestigungsmittel können dabei Klammern oder Gewichte umfassen.

Eine weitere Aufgabe der Erfindung, die Bereitstellung eines Bezugsstoffes für das Beziehen eines Objektes, wird mit Anspruch 11 gelöst. Der erfindungsgemäße Bezugsstoff umfasst das oben beschriebene Oberflächenmaterial mit Oberseite und Rückseite sowie die Fixierungsschicht aus Kunststoff, wobei in einem unbelasteten Ruhezustand des Bezugsstoffes das Oberflächenmaterial und die Fixierungsschicht sich jeweils in einem vorgespannten Zustand befinden. Dieser unbelastete Ruhezustand tritt beispielsweise dann ein, wenn nach erfolgtem Auftragen und Aushärten des Kunststoffes zur Bildung der Fixierungsschicht die Befestigungsmittel, welche den Bezugsstoff am Formkörper halten, gelöst werden und der Bezugsstoff von dem Formkörper getrennt wird. Bezüglich der möglichen Ausgestaltungen des Bezugsstoffes wird auf die obigen Ausführungen im Rahmen der Beschreibung zum erfindungsgemäßen Verfahren verwiesen.

Anhand der in der Zeichnung dargestellten Ausführungsbeispiele wird die Erfindung näher erläutert. Es zeigen:
- Figur 1: mehrere Verfahrensschritte eines Ausführungsbeispiels des erfindungsgemäßen Verfahrens;
- Figur 2: ein erfindungsgemäßer Bezugsstoff im verformten Zustand; und
- Figur 3: ein weiteres erfindungsgemäßes Ausführungsbeispiel für den Bezugsstoff.

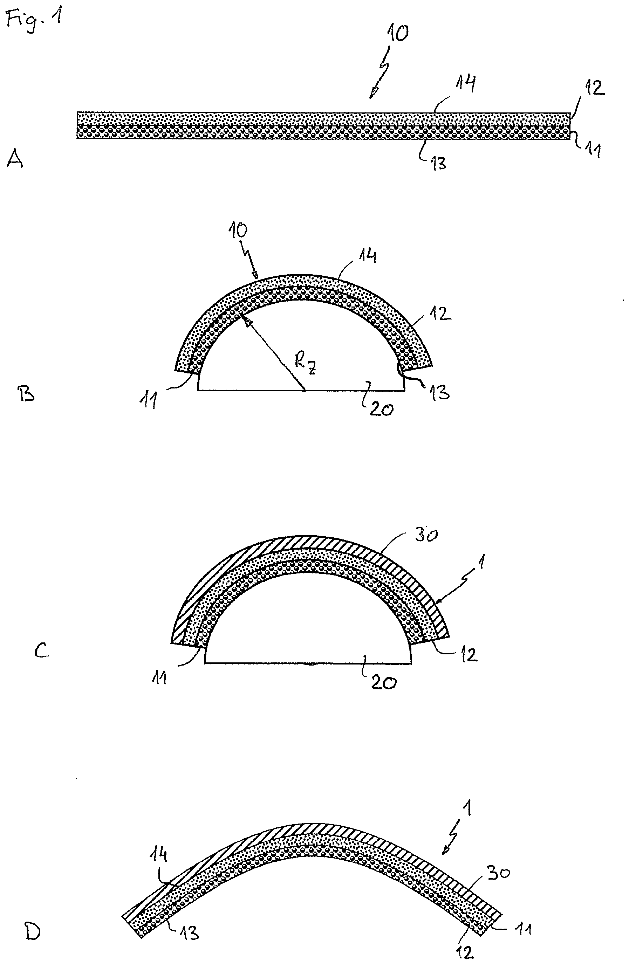

Figur 1 zeigt mehrere Verfahrensschritte eines Ausführungsbeispiels für das erfindungsgemäße Verfahren. Figur 1A zeigt ein Oberflächenmaterial 10 mit einer ersten Schicht 11 und einer zweiten Schicht 12. Die erste Schicht 11 kann ein textiles Flächengebilde sein und bildet eine Oberseite 13 des Oberflächenmaterials 10. Die zweite Schicht 12 ist eine Schaumschicht und bildet eine Rückseite 14 des Oberflächenmaterials 10. Im Verfahrensschritt gemäß Figur 1A liegt das Oberflächenmaterial 10 als rechteckiger ebener Bogen vor, wobei die erste Schicht 11 und die zweite Schicht 12 im Wesentlichen spannungsfrei sind. Das Oberflächenmaterial 10 befindet sich hier in einem unbelasteten Urzustand.

Der rechteckige Bogen der Figur 1A wird auf einen Formkörper 20 gelegt und derart an dem Formkörper 20 fixiert, dass das Oberflächenmaterial 10 die Kontur des Formkörpers 20 annimmt. Der Formkörper 20 ist im hier gezeigten Ausführungsbeispiel ein Halbzylinder mit einem Radius Rz (siehe Figur 1B). Der Radius Rz kann beispielsweise in einem Bereich zwischen 5 bis 20 cm liegen. Die Oberseite 13 des Oberflächenmaterials 10 liegt dabei auf der Mantelfläche des Halbzylinders 20 auf. Die Rückseite 14 des Oberflächenmaterials 10 zeigt radial nach außen. Befestigungs- oder Haltemittel, die das Oberflächenmaterial 10 in der gekrümmten Form halten, sind in Figur 1 nicht dargestellt. Die Befestigungs- oder Haltemittel wirken dabei elastischen Rückstellkräften des Oberflächenmaterials 10 entgegen.

Im verformten Zustand des Oberflächenmaterials 10 wird auf dessen Rückseite 14 eine Fixierungsschicht 30 aus Kunststoff, vorzugsweise Polyurethan, aufgetragen. Der Kunststoff wird dabei in flüssiger Form aufgesprüht oder aufgegossen und härtet danach aus. Im Gegensatz zu dem Oberflächenmaterial 10 steht die Fixierungsschicht 30 in Figur 1C nicht unter Spannung, weil sich die Form der Fixierungsschicht 30 während ihrer Entstehung durch das Auftragen des fließfähigen Kunststoffes und des Aushärtens nicht ändert. Das Oberflächenmaterial 10 und die Fixierungsschicht 30 bilden einen Bezugsstoff, der mit 1 gekennzeichnet ist. Der Bezugsstoff 1 dient zum Beziehen eines Objektes wie beispielsweise ein Autositz.

Nach dem erfolgten Aushärten der Fixierungsschicht 30 wird das Oberflächenmaterial 10 bzw. der Bezugsstoff 1 von dem Formkörper 20 getrennt. Bedingt durch die Rückstellkräfte im Oberflächenmaterial 10 nimmt der Bezugsstoff 1 eine Form (siehe Figur 1D) an, die weniger gekrümmt ist als im fixierten Zustand auf dem Formkörper / Halbzylinder 20 (siehe Figur 1C). Durch das Zurückfedern des Oberflächenmaterials 10 in Richtung des unbelasteten Urzustands (siehe Figur 1A) wird nun auch die Fixierungsschicht 30 unter Spannung gesetzt. Die verbleibende Spannung im Oberflächenmaterial 10 und die entstandene Spannung in der Fixierungsschicht 30 stehen dabei im Gleichgewicht. Der Bezugsstoff 1 befindet sich nun in einem unbelasteten Ruhezustand, gleichwohl dessen einzelne Schichten unter Spannung stehen.

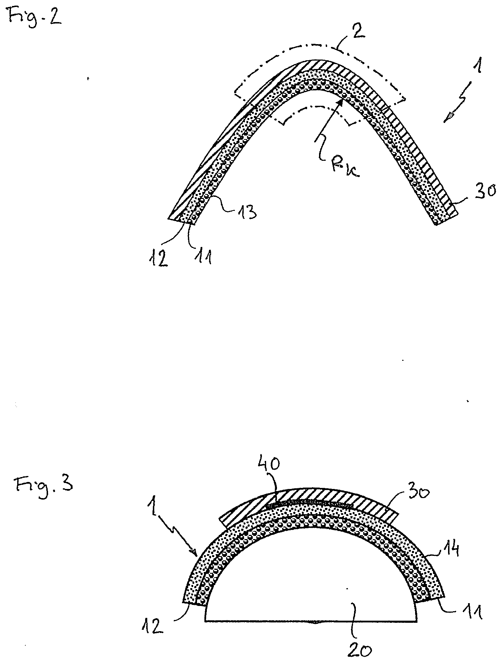

Figur 2 zeigt den Bezugsstoff 1 in einem stark gekrümmten Zustand. Die Verformung geht dabei über die Verformung hinaus, welche für das Oberflächenmaterial 10 bei der Befestigung auf dem Formkörper 20 gegeben war. Die Oberseite 13 des Oberflächenmaterials 10 ist dabei in einem Knickgefährdungsbereich 2, der mit einer strichpunktierten Linie angedeutet ist, größeren Druckspannungen ausgesetzt, durch die die Oberseite 13 einknicken kann. Das Resultat dieses Einknickens sind Knickfalten, die aus ästhetischen Gründen unerwünscht sind und die Oberseite 13 auch dauerhaft schädigen können.

Ausgehend von dem in Figur 1D gezeigten Ruhezustand kann der Bezugsstoff 1 schrittweise in Richtung der Verformung gemäß Figur 2 verformt werden. Bei jedem Schritt wird überprüft, ob sich dabei Knickfalten bilden. Die Verformung wird so lange schrittweise erhöht, bis sich Knickfalten an der Oberseite 13 bilden. Für diesen Punkt wird ein korrespondierender Krümmungsradius R_{K} notiert. Je kleiner der Krümmungsradius R_{K} ist, bei dem sich zum ersten Mal Knickfalten bilden, desto flexibel kann der Bezugsstoff 1 für komplex gestaltete Objekte eingesetzt werden. Bei einem Vergleich zwischen einem Oberflächenmaterial 10 mit erfindungsgemäß aufgetragener Fixierungsschicht und dem gleichen Oberflächenmaterial 10 ohne Fixierungsschicht hat sich gezeigt, dass sich durch das Auftragen der Fixierungsschicht 30 der Bezugsstoff 1 deutlich mehr verformen lässt als das unbehandelte Oberflächenmaterial 10, ohne dass dabei Knickfalten auftreten.

Figur 3 zeigt ein weiteres Ausführungsbeispiel für den Bezugsstoff 1. Der Bezugsstoff 1 ist hier in einem Zustand gezeigt, in dem er noch auf dem Formkörper 20 fixiert ist. Nur im Knickgefährdungsbereich 2 (vergleiche Figur 2) ist auf die Rückseite 14 des Oberflächenmaterials 10 die Fixierungsschicht 30 aufgetragen. Zudem ist zwischen der zweiten Schicht 12 des Oberflächenmaterials 10 und der Fixierungsschicht 30 eine Verstärkungsschicht 40 vorgesehen. Die Verstärkungsschicht 40 befinden sich dabei in einem mittleren Abschnitt des Knickgefährdungsbereichs 2.

### Bezugszeichenliste

- 1: Bezugsstoff
- 2: Knickgefährdungsbereich
- 10: Oberflächenmaterial
- 11: erste Schicht
- 12: zweite Schicht
- 13: Oberseite
- 14: Rückseite
- 20: Formkörper / Halbzylinder
- 30: Fixierungsschicht
- 40: Verstärkungsschicht

## Patentansprüche

1. Verfahren zur Bereitstellung eines Bezugsstoffes (1), welcher zum Beziehen eines Objekts dient und beim Beziehen des Objekts derart verformt wird, dass eine Oberseite (13) eines Oberflächenmaterials (10) des Bezugsstoffes (1) in einem Knickgefährdungsbereich (2) einer Druckspannung ausgesetzt ist, wobei das Verfahren umfasst:
a. Herstellen des Oberflächenmaterials (10);
b. Überführen des Oberflächenmaterials (10) in einen verformten Zustand, bei dem die Oberseite (13) des Oberflächenmaterials (10) in dem Knickgefährdungsbereich (10) auf Druck beansprucht wird,
c. Auftragen eines aushärtbaren Kunststoffes in fließfähiger Form auf eine Rückseite (14) des Oberflächenmaterials zur Bildung einer rückseitigen Fixierungsschicht (30);
d. Aushärten des Kunststoffes; und
e. Auflösen des verformten Zustands des Oberflächenmaterials (10) nach erfolgter Aushärtung des Kunststoffes.

2. Verfahren nach Anspruch 1, **dadurch gekennzeichnet, dass** der Kunststoff auf die Rückseite (14) des Oberflächenmaterials (10) aufgesprüht oder aufgegossen wird.

3. Verfahren nach Anspruch 1 oder 2, **dadurch gekennzeichnet, dass** der Kunststoff der rückseitigen Fixierungsschicht (30) mit einem Flächengewicht von 20 bis 700 g/m², 45 bis 250 g/m² oder 70 bis 150 g/m² aufgetragen wird.

4. Verfahren nach einem der Ansprüche 1 bis 3, **dadurch gekennzeichnet, dass** der Kunststoff nur im Knickgefährdungsbereich (2) auf die Rückseite (14) des Oberflächenmaterials (10) aufgetragen wird

5. Verfahren nach einem der Ansprüche 1 bis 3, **dadurch gekennzeichnet, dass** der Kunststoff der rückseitigen Fixierungsschicht (30) physikalisch und/oder chemisch aushärtet.

6. Verfahren nach einem der Ansprüche 1 bis 4, **dadurch gekennzeichnet, dass** der Kunststoff der rückseitigen Fixierungsschicht (30) Polyurethan ist.

7. Verfahren nach einem der Ansprüche 1 bis 6, **dadurch gekennzeichnet, dass** das Oberflächenmaterial (10) eine erste Schicht (11) aufweist, die ein textiles Flächengebilde ist und/oder aus Leder, Kunststoff bzw. Kunstleder ist.

8. Verfahren nach einem der Anspruch 7, **dadurch gekennzeichnet, dass** das Oberflächenmaterial (10) eine zweite Schicht (12) aus einem Schaum aufweist.

9. Verfahren nach einem der Ansprüche 1 bis 8, **dadurch gekennzeichnet, dass** an der Rückseite (14) des Oberflächenmaterials (10) eine Verstärkungsschicht (40) angebracht wird.

10. Verfahren nach einem der Ansprüche 1 bis 9, **dadurch gekennzeichnet, dass** für das Überführen des Oberflächenmaterials (10) in den verformten Zustand ein Formkörper (20) verwendet wird, an dem das Oberflächenmaterial (10) anliegt, sodass das Oberflächenmaterial (10) einer Kontur des Formkörpers (20) folgt.

11. Bezugsstoff (1) für das Beziehen eines Objektes, umfassend ein Oberflächenmaterial (10) mit einer Oberseite (10) und mit einer Rückseite (14) sowie eine Fixierungsschicht (30) aus Kunststoff, wobei in einem unbelasteten Ruhezustand des Bezugsstoffes (1) das Oberflächenmaterial (10) und die Fixierungsschicht (30) sich jeweils in einem vorgespannten Zustand befinden.
